Europäisches Patentamt

European Patent Office

Office européen des brevets

(11) Veröffentlichungsnummer: **0 516 004 A2**

# EUROPÄISCHE PATENTANMELDUNG

(21) Anmeldenummer: **92108723.5**

(22) Anmeldetag: **23.05.92**

(51) Int. Cl.5: **A01B 61/04**

(30) Priorität: **31.05.91 DE 4117947**

(43) Veröffentlichungstag der Anmeldung:
**02.12.92 Patentblatt 92/49**

(84) Benannte Vertragsstaaten:
**AT CH DE DK FR GB IT LI NL SE**

(71) Anmelder: **Bodenbearbeitungsgeräte Leipzig AG**
**Karl-Heine-Strasse 90**
**O-7031 Leipzig(DE)**

(72) Erfinder: **Schwope, Reinhard**
**Am Sportplatz 14**
**O-4201 Wallendorf(DE)**

(74) Vertreter: **Liebe, Rainer**
**Bodenbearbeitungsgeräte Leipzig AG,**
**Patentabteilung, Karl-Heine-Strasse 90**
**O-7031 Leipzig(DE)**

(54) **Hydromechanische Überlastsicherung für Beet- und Drehpflüge.**

(57) Die Erfindung betrifft eine hydromechanische Überlastsicherung für Beet- und Drehpflüge.

Aufgabe der Erfindung ist, eine kompakte und funktionssichere hydromechanische Überlastsicherung zu schaffen, die für Beet- und Drehpflüge gleichermaßen einsetzbar ist.

Dazu ist das Schwenkgelenk (4) des Grindels (2) sowohl beim Dreh- als auch beim Beetpflug in einer idellen horizontalen Symmetrieebene (5) durch den Hydraulikzylinder (6) am Pflugrahmen (3) angeordnet, beim Beetpflug oberhalb der Symmetrieebene (5) ein erstes Hebelsystem (9) mit Anschlag (15) sowie beim Drehpflug unterhalb der Symmetrieebene (5) zusätzlich ein zweites Hebelsystem (9) mit Anschlag (15), symmetrisch zum ersten angeordnet.

Fig.1

Die Erfindung betrifft eine hydromechanische Überlastsicherung für Beet- und Drehpflüge zum Einsatz in der Bodenbearbeitung.

Bei Drehpflügen sind Überlastsicherungen bekannt, die das Ausheben und Einsetzen der Pflugkörper mittels eines im rohrförmigen Grindel angeordneten Hydraulikzylinders realisieren. Weiterhin ist es bekannt, den Hydraulikzylinder durch ein Kniehebelsystem am Pflugrahmen abzustützen.

Für Beetpflüge zeigt die EP-PS 37 848 eine ähnliche Lösung, mit der eine relativ kompakte leichte Überlastsicherung bekannt ist. Allerdings ist dabei das Schwenkgelenk des Grindels unterhalb des Pflugrahmens angeordnet. Außerdem liegt bei dieser Lösung die volle Abstützkraft des Hydraulikzylinders nicht nur in Arbeits-, sondern auch in Transportstellung des Pflugkörpers am Kniehebelsystems an. Deshalb ist zur Fixierung der Transportstellung ein mit dem Pflugrahmen verbundener verstellbarer Anschlag unterhalb des Grindels angeordnet, da dieser sonst nach unten ausgelenkt würde.

Bedingt durch diese Anordnung der wesentlichen Bauteile der Überlastsicherung ist unterhalb des Grindels kaum Freiraum vorhanden, so daß eine solche Überlastsicherung nur für Beet- nicht aber für Drehpflüge einsetzbar ist. Außerdem kann aufgrund der formschlüssigen Verbindung des Kniehebelsystems mit dem Hydraulikzylinder kein weiteres Kniehebelsystems am Hydraulikzylinder angreifen, d.h. auch deshalb ist eine solche Überlastsicherung nicht für Drehpflüge geeignet. Bei der bekannten Lösung liegt der Anlenkpunkt des Hydraulikzylinders auf einer vertikalen Kreisbahn, d.h. es kann beim Ausheben und Absenken des Pflugkörpers zum Verkanten des Hydraulikzylinders im Grindel kommen.

Das Kniehebelsystem weist an seiner Verbindungsstelle mit dem Pflugrahmen eine Vorrichtung zur Einstellung der Auslösekraft für die Überlastsicherung auf, was den Bauaufwand zusätzlich erhöht.

Aufgabe der Erfindung ist es daher, eine kompakte und funktionssichere hydromechanische Überlastsicherung zu schaffen, die für Beet- und Drehpflüge gleichermaßen einsetzbar ist.

Diese Aufgabe wird dadurch gelöst, daß das am Pflugrahmen angeordnete Schwenkgelenk des Grindels sowohl beim Dreh- als auch beim Beetpflug auf einer ideellen horizontalen Symmetrieebene durch den Hydraulikzylinder liegt. Beim Beetpflug ist ein erstes Hebelsystem einschließlich Anschlag oberhalb und beim Drehpflug zusätzlich ein zweites Hebelsystem einschließlich Anschlag unterhalb der Symmetrieebene angeordnet.

Das Hebelsystem besteht aus einem Druckhebel und einer etwa mittig daran angeordneten Drucklasche. Die Drucklasche ist in einem Gelenk mit dem Pflugrahmen verbunden und der Druckhebel an seinem oberen Ende gelenkig am Grindel angeordnet. Der Druckhebel weist einerseits eine Berührungs- und Abrolifläche mit dem Kolben auf und liegt andererseits an einem am Grindel angeordneten Anschlag an.

In beiden Grindelseiten ist jeweils ein Führungslangloch angeordnet, welches der Aufnahme und Führung von an beiden Kolbenseiten befestigten Führungselementen dient.

Beim Einsatz der Überlastsicherung im Drehpflug wird der der Verbindung von Drucklasche und Druckhebel dienende Gelenkbolzen in einem an der Drucklasche angeordneten Langloch geführt. Der am Grindel befestigte Anschlag ist mittels einer Verstellschraube einstellbar ausgebildet. Am Grindel ist ein die beweglichen Teile der Überlastsicherung abdeckendes Schutzblech angeordnet.

In Arbeitsstellung wird der Pflugkörper mittels des Hebelsystems in seiner unteren Endstellung gehalten. Da der Druckhebel auch bei Transportstellung am Anschlag anliegt, stützt sich die Zylinderkraft dort ab. Somit hängt der Grindel nur mit seinem und dem Eigengewicht des Pflugkörpers an der Drucklasche, was deren Belastung wesentlich mindert.

Die Justierung des Grindels in seiner Nullstellung erfolgt mittels des einstellbaren Anschlages.

Trifft der Pflugkörper auf ein Hindernis, so bewegt sich der Grindel um sein Schwenkgelenk nach oben. Gleichzeitig wird der Druckhebel durch die Drucklasche nach hinten bewegt. Während der Schwenkbewegung des Druckhebels wird der mittels der Führungselemente in den Führungslanglöchern waagerecht geführte Kolben nach hinten gedrückt, wobei der Druckhebel an der Berührungs- und Abrollfläche auf der Kolbenfläche abwälzt. Infolge der horizontalen Verschiebung des Kolbens wird der Zylinder zusammengedrückt. Nach Überwindung des Hindernisses drückt der Zylinder den Druckhebel in seine Ausgangslage zurück und somit den Pflugkörper in seine Arbeitsstellung.

Infolge der bereits beim Beetpflug vorgesehenen Anordnung des Grindelschwenkgelenkes in der Symmetrieebene des Hydraulikzylinders und der Anordnung des Hebelsystems, einschließlich des Anschlages oberhalb dieser Symmetrieebene, entsteht unterhalb des Grindels der nötige Freiraum, um dort das für den Einsatz beim Drehpflug erforderliche zweite Hebelsystem, einschließlich Anschlag, symmetrisch anzuordnen.

Außerdem ergibt sich erst durch die kraftschlüssige Anordnung des Druckhebels am Kolben die Möglichkeit, zwei symmetrische Hebelsysteme mit dem Hydraulikzylinder zu verbinden.

Die Funktion der Überlastsicherung verlauft beim Drehpflug analog der beim Beetpflug. Der einzige Unterschied besteht darin, daß beim Ausschwenken des Pflugkörpers nach oben der untere Gelenkbolzen von Druckhebel und Drucklasche im Langloch der unteren Drucklasche nach hinten gleitet, währenddessen er sich beim Absetzen des Pflugkörpers im Langloch nach oben bewegt.

Im Folgenden sind zwei Ausführungsbeispiele der Erfindung naher erläutert und auf der Zeichnung dargestellt.

Dabei zeigen:

Fig. 1: Seitenansicht einer erfindungsgemäßen Überlastsicherung für Beetpflüge in Arbeitsstellung

Fig. 2: Seitenansicht entsprechend Fig. 1 in ausgelenkter Stellung

Fig. 3: Seitenansicht einer erfindungsgemäßen Überlastsicherung für Drehpflüge in Arbeitsstellung

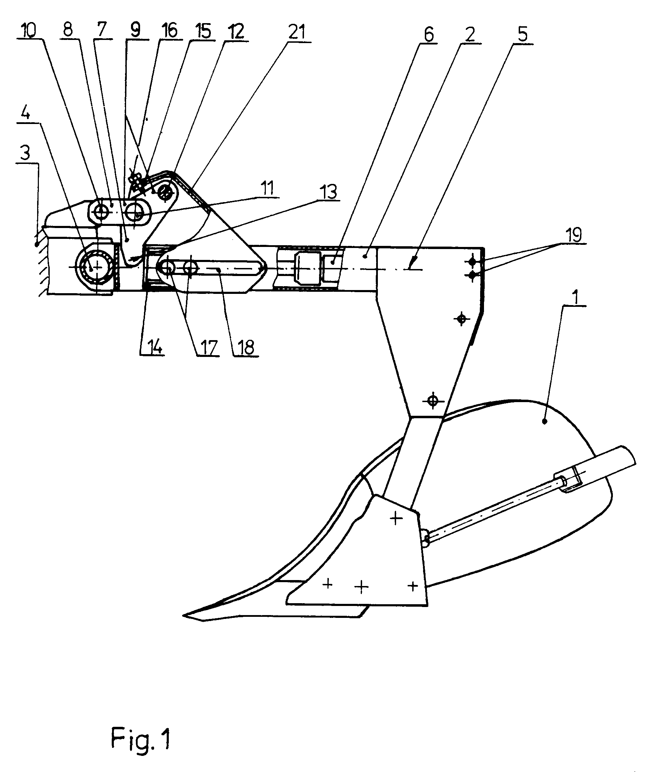

Der Pflugkörper 1 ist mit dem Grindel 2 am Pflugrahmen 3 im Schwenkgelenk 4 gelagert. Dabei ist das Schwenkgelenk 4 auf einer ideellen horizontalen Symmetrieebene 5 durch den Hydraulikzylinder 6 angeordnet. Grindel 2 und Pflugkörper 1 sind gegen den Pflugrahmen 3 durch ein oberhalb der Symmetrieebene 5 angeordnetes und aus einem Druckhebel 7 sowie einer Drucklasche 8 bestehendes Hebelsystem 9 abgestützt. Die Drucklasche 8 ist mit dem Gelenk 10 am Pflugrahmen 3 und mit dem Gelenkbolzen 11 am Druckhebel 7 befestigt. Der Druckhebel 7 ist im Gelenk 12 drehbar am Grindel 2 angeordnet und wird an seiner am unteren Ende ausgebildeten Berührungs- und Abrollfläche 13 durch den Kolben 14 des Hydraulikzylinders 6 gehalten. Am Grindel 2 ist ein verstellbarer Anschlag 15 mit einer Verstellschraube 16 ausgebildet, der mit seiner Unterseite am Druckhebel 7 anliegt (Fig. 1).

Der Kolben 14 wird mit seinen als Bolzen 17 ausgebildeten Führungselementen in den Führungslanglöchern 18 beiderseits des Grindels 2 gehalten. Der Hydraulikzylinder 6 ist in der Halterung 19 am Grindel 2 befestigt.

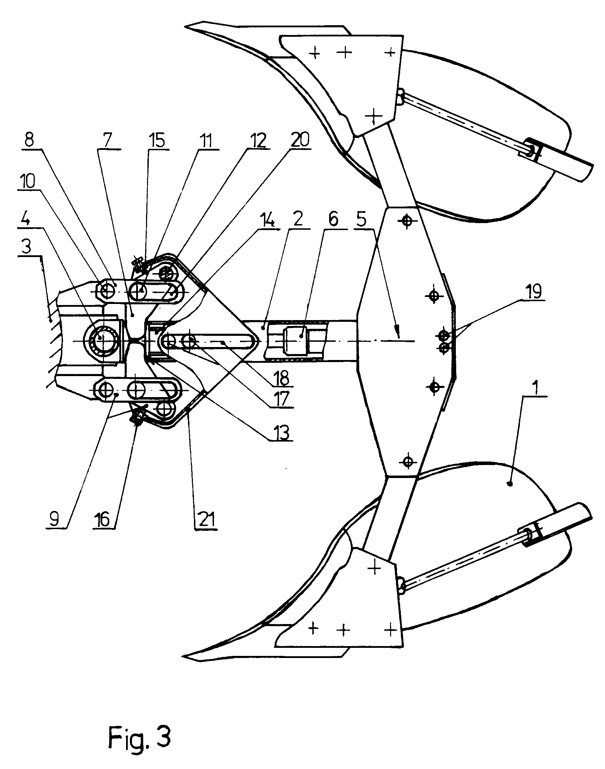

Beim Drehpflug ist die Überlastsicherung mit einem zweiten Hebelsystem 9 und einem zweiten Anschlag 15 ausgestattet, die unterhalb der Symmetrieebene 5 angeordnet und symmetrisch zum ersten Hebelsystem 9 bzw. zum ersten Anschlag 15 ausgebildet sind. Dabei ist an jeder Drucklasche 8 ein Langloch 20 zur Führung des entsprechenden Gelenkbolzens 11 angeordnet (Fig. 3).

Am Grindel 2 ist ein die beweglichen Teile der Überlastsicherung abdeckendes Schutzblech 21 angeordnet.

In der Arbeitsstellung ist der Pflugkörper 1 in seiner unteren Endstellung und der Grindel 2 wird durch den am Anschlag 15 anliegenden Druckhebel 7 über die Drucklasche 8 am Pflugrahmen 3 gehalten.

Eine Einstellung der Endlage des Grindels 2 erfolgt durch die senkrechte Verschiebung des Anschlages 15 mittels der Verstellschraube 16.

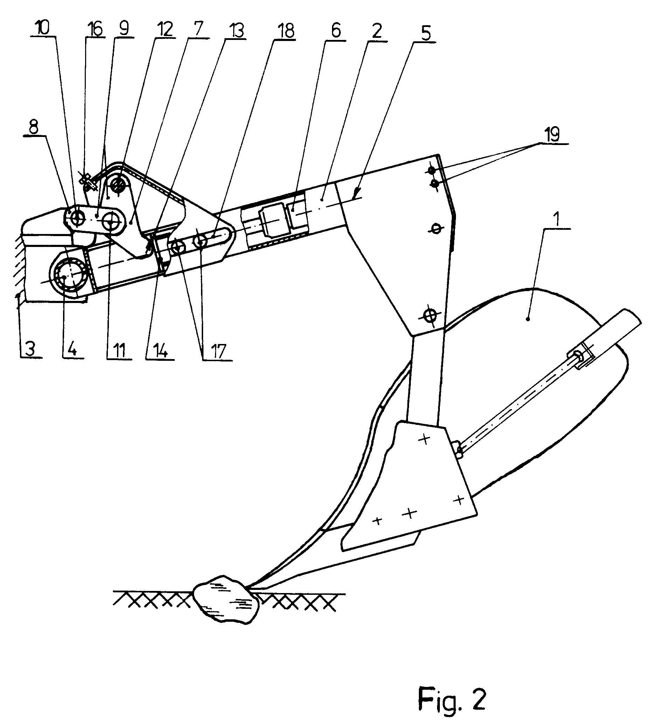

Stößt der Pflugkörper 1 auf ein Hindernis, so bewegt sich der Grindel 2 um den Schwenkgelenk 4 und gleichzeitig wird der Druckhebel 7 durch die Drucklasche 8 nach hinten bewegt. Während der Schwenkbewegung des Druckhebels 7 wird der mittels der Bolzen 17 durch die Führungslanglöcher 18 geführte Kolben 14 nach hinten bewegt. Dabei wälzt der Druckhebel 7 an der Berührungs- und Abrollfläche 13 auf dem Kolben 14 ab. Während der Verschiebung des Kolbens 14 wird der Hydraulikzylinder 6 zusammengedrückt (Fig. 2).

Die Funktionsweise der Überlastsicherung beim Drehpflug ist im Prinzip analog. Lediglich der Gelenkbolzen 11 des unteren Hebelsystems 9 wird beim Hochschwenken des Pflugkörpers 1 im Langloch 20 der unteren Drucklasche 8 nach hinten geführt, währenddessen er sich beim Absetzen des Pflugkörpers 1 wieder nach vorn bewegt.

Aufstellung der verwendeten Bezugszeichen

| 1 | Pflugkörper |
|---|---|
| 2 | Grindel |
| 3 | Pflugrahmen |
| 4 | Schwenkgelenk |
| 5 | Symmetrieebene |
| 6 | Hydraulikzylinder |
| 7 | Druckhebel |
| 8 | Drucklasche |
| 9 | Hebelsystem |
| 10 | Gelenk |
| 11 | Gelenkbolzen |
| 12 | Gelenk |
| 13 | Berührungs- und Abrollfläche |
| 14 | Kolben |
| 15 | Anschlag |
| 16 | Verstellschraube |
| 17 | Bolzen, Führungselement |
| 18 | Führungslangloch |
| 19 | Halterung |
| 20 | Langloch |
| 21 | Schutzblech |

**Patentansprüche**

1. Hydromechanische Überlastsicherung für Beet- und Drehpflüge mit einem über ein Hebelsystem am Pflugrahmen abgestützten rohrförmigen Grindel, einem die Arbeitsstellung des Grindels festlegenden Anschlag, einem am Pflugrahmen angeordneten Schwenkgelenk für den Grindel und einem im Grindel angeordneten Hydraulikzylinder, welcher zwischen einem am Grindel ortsfesten und einem beweglichen Lager gehaltert wird, dadurch gekennzeichnet, daß das Schwenkgelenk (4) sowohl beim Dreh- als auch beim Beetpflug auf einer ideellen horizontalen Symmetrieebene (5) durch den Hydraulikzylinder (6) am Pflugrahmen (3) angeordnet ist und beim Beetpflug oberhalb der Symmetrieebene (5) ein erstes Hebelsystem (9) mit Anschlag (15) sowie beim Drehpflug unterhalb der Symmetrieebene (5) zusätzlich ein zweites Hebelsystem (9) mit Anschlag (15), symmetrisch zum ersten angeordnet ist.

2. Hydromechanische Überlastsicherung für Beet- und Drehpflüge nach Anspruch 1, dadurch gekennzeichnet, daß das Hebelsystem aus einem über ein Gelenk (12) mit dem Grindel (2) verbundenen Druckhebel (7) sowie einer etwa mittig daran angelenkten und in einem Gelenk (10) mit dem Pflugrahmen (3) verbundenen Drucklasche (8) besteht.

3. Hydromechanische Überlastsicherung für Beet- und Drehpflüge nach den Ansprüchen 1 und 2, dadurch gekennzeichnet, daß der Druckhebel (7) einerseits eine Berührungs- und Abrollfläche (13) mit dem Kolben (14) aufweist und andererseits am Anschlag (15) anliegt.

4. Hydromechanische Überlastsicherung für Beet- und Drehpflüge nach den Ansprüchen 1 bis 3, dadurch gekennzeichnet, daß beide Seiten des Grindels (2) jeweils ein Führungslangloch (18) zur Aufnahme am Kolben (14) befestigter Führungselemente (17) aufweisen.

5. Hydromechanische Überlastsicherung für Beet- und Drehpflüge nach den Ansprüchen 1 bis 4, dadurch gekennzeichnet, daß beim Drehpflug der Gelenkbolzen (11) von Drucklasche (8) und Druckhebel (7) in einem an der Drucklasche (8) befindlichen Langloch (20) geführt wird.

6. Hydromechanische Überlastsicherung für Beet- und Drehpflüge nach den Ansprüchen 1 bis 5, dadurch gekennzeichnet, daß am Anschlag (15) eine Verstellschraube (16) angeordnet ist.

7. Hydromechanische Überlastsicherung für Beet- und Drehpflüge nach den Ansprüchen 1 bis 6, dadurch gekennzeichnet, daß am Grindel (2) ein die beweglichen Teile der Überlastsicherung abdeckendes Schutzblech (21) angeordnet ist.

Fig. 1

Fig. 2

Fig. 3